# EUROPEAN PATENT SPECIFICATION

(11) **EP 3 128 357 B1**
(45) Date of publication and mention of the grant of the patent: **04.03.2020**
(21) Application number: 16152031.7
(22) Date of filing: 20.01.2016
(51) Int. Cl.: B60R 1/00, G02B 27/01, G02B 27/00

(54) **DISPLAY DEVICE**
ANZEIGEVORRICHTUNG
DISPOSITIF D'AFFICHAGE

(30) Priority: 05.08.2015 KR 20150110447
(43) Date of publication of application: 08.02.2017
(73) Proprietor: LG Electronics Inc., Seoul 07336 (KR)
(72) Inventor: KIM, Dongwook, 08592 Seoul (KR); XU, Xuelong, 08592 Seoul (KR); LEE, Kyoungil, 08592 Seoul (KR); KIM, Minhyung, 08592 Seoul (KR)
(74) Representative: Vossius & Partner Patentanwälte Rechtsanwälte mbB

(56) References cited:
- EP-A1- 2 869 114
- EP-A2- 2 351 668
- WO-A2-2007/014180
- JP-A- 2012 163 613
- JP-B1- 4 847 627
- KR-A- 20150 071 471
- US-A- 3 945 716
- US-A1- 2009 237 803
- US-A1- 2010 164 702

## Description

The present invention relates to a display device and, more particularly, to a Head Up Display (HUD) device for vehicles, which may effectively transmit driving information to a driver while a vehicle is being driven.

In order to more effectively transmit driving information to a driver while a vehicle is being driven, studies to a next generation display device, which is called a Head Up Display (HUD) device, are being actively conducted.

A HUD device is a front display device that displays driving information on the windshield of a vehicle while the vehicle is being driven. This was originally introduced in airplanes in order to secure the pilot's view.

In recent years, with the development of future vehicles as well as an increase in the amount of information to be transmitted to a driver, the HUD device has begun to be applied to vehicles.

In particular, in consideration of the fact that a variety of vehicle displays including a navigation system are inconvenient to use and entail the risk of causing accidents because a screen is not located in the driver's forward field of view, the HUD device has been studied as means to replace or complement these vehicle displays.

The HUD device displays information, required to drive a vehicle, in a three-dimensional way, in the driver's forward field of view, so as to overlap the scene in front of the vehicle. Drivers of vehicles equipped with HUD devices do not need to move their eyes while driving in order to check, for example, the RPM of the vehicle indicated on a dashboard or turn signals.

At this time, since in the case of vehicles, unlike airplanes, the scene in front of the vehicle constantly changes, the reflective surface of the windshield requires a high reflectance in order to ensure good perception of displayed images, and the transmittance of the windshield must be 70% or more in order to secure forward visibility.

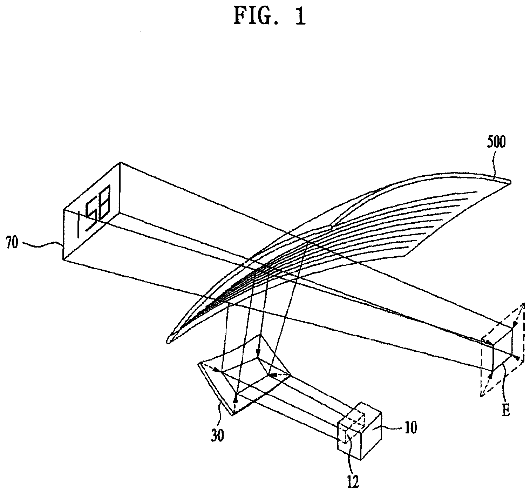

FIG. 1 is a view schematically illustrating the configuration of an HUD device in accordance with one embodiment of the related art.

Referring to FIG. 1, in a conventional display device, a display panel 10, configured to display driving information such as, for example, the RPM of a vehicle, traffic information, and navigation information, outputs the information as an image via a screen thereof, and the output image is reflected by a concave mirror 30 and directed to a windshield 500.

Then, the image, projected on the windshield 500, is reflected and transmitted to the driver's eyes. At this time, the image, transmitted to the driver's eyes, overlaps the scene in the driver's forward field of view, thereby being perceived as a virtual image by the driver. JP 2012 163613 A discloses such a HUD, in which a light output is reflected and magnified by a concave mirror to be projected onto a windshield. With the windshield used as a combiner, the display light arrives at an eye point of a driver. US 2010/164702 A1 relates to an automotive display system inter alia including an image projection unit which projects a light flux including an image including a display object toward one eye of an image viewer. JP 4 847627 B1 relates to a display device including a light source unit, an optical element, and a movable portion wherein the light source unit is installed in a vehicle and configured to irradiate light which forms a display image.

In order to transmit large amounts of driving information to the driver, the size of the virtual image needs to be increased. Although there are various methods for increasing the size of the virtual image, the size of the concave mirror becomes the most important factor.

This is because the image output from the display panel is reflected by a size corresponding to the size of the concave mirror. In other words, the concave mirror serves as a window. The virtual image, which is visible via the windshield, is an image that has successfully passed through the window, i.e. the concave mirror. Thus, although the surface area of the concave mirror needs to be increased in order to increase the size of the virtual image, any increase in the size of the concave mirror is accompanied by an increase in the volume of the display device.

In addition, in order to dispose the HUD device in the limited space inside the vehicle, it is critically important to reduce the volume of the HUD device. In this case, although reducing the size of the concave mirror is the most obvious way of reducing the volume of the HUD device, this problematically reduces the driver's view box. That is, the embodiment illustrated in FIG. 1 suffers from a reduction in the driver's view box when the size of the concave mirror is reduced.

Accordingly, the present invention is directed to a display device that substantially obviates one or more problems due to limitations and disadvantages of the related art. The invention is set out in the appended set of claims.

An object of the present invention is to provide a display device, which provides a HUD device.

In addition, another object of the present invention is to provide a display device, which minimizes the volume of a HUD device, thereby allowing the HUD device to be easily installed in a vehicle having a limited space.

In addition, a further object of the present invention is to provide a display device, which provides a larger view box than a view box that can be made using the concave mirror provided in a general HUD device.

These objects are achieved with the features of the claims. Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

To achieve these objects and other advantages and in accordance with the purpose of the invention, as embodied and broadly described herein, in accordance with an aspect of the present invention, a display device includes a display panel configured to provide an image containing driving information, a concave mirror configured to reflect the image to a windshield, so as to cause a driver to view a virtual image via the windshield, a sensing unit configured to sense a position of the driver, the sensing unit including one tracking camera to sense a movement of the driver's eyes or the driver's head, a drive unit configured to move the concave mirror, and a controller connected to the display panel, the sensing unit, and the drive unit, wherein the controller controls the drive unit so as to move the concave mirror in order to move a view box when the sensing unit senses variation in the position of the driver, the view box being an area in which the entire image containing the driving information is seen by the driver, and the controller is configured to control the display panel so as to correct a position of the virtual image when the concave mirror is rotated as the position of the driver changes, to control the display panel such that the image on the display panel is moved leftward by a second prescribed distance, in order to correct the rightward movement of the virtual image by a first prescribed distance when the concave mirror is rotated clockwise, to control the display panel such that the virtual image is fixed so as to match a forward scene, and when the sensing unit senses that the position of the driver deviates from the view box despite the rotation of the concave mirror, the controller is configured to control a notification module so as to provide the driver with a warning message announcing that the driver deviates from the view box due to excessive movement.

In this case, the sensing unit may sense movement of the driver's head, or may sense movement of the driver's pupils.

Meanwhile, the drive unit may rotate the concave mirror vertically or horizontally.

Meanwhile, the drive unit may rotate the concave mirror without moving a center position of the concave mirror.

Meanwhile, the controller may control the drive unit so as to rotate the concave mirror downward and correspondingly move the view box upward when the sensing unit senses that the position of the driver has moved upward.

The controller may control the drive unit so as to rotate the concave mirror upward and correspondingly move the view box downward when the sensing unit senses that the position of the driver has moved downward.

In addition, the controller may control the display panel so as to correct a magnification of the virtual image when the concave mirror is rotated as the position of the driver is moved.

In this case, the controller may control the image on the display panel such that a ratio of the right side of the image to the left side thereof becomes greater than 1, in order to prevent that a ratio of the left side of the virtual image to the right side thereof from becoming greater than 1 when the concave mirror is rotated clockwise.

Meanwhile, in accordance with another aspect of the present invention, a display device includes a display panel configured to provide an image containing driving information, a combiner configured to reflect a portion of the image and to pass a remaining portion of the image, so as to cause a driver to view a virtual image, a sensing unit configured to sense a position of the driver, the sensing unit including one tracking camera to sense a movement of the driver's eyes or the driver's head, a drive unit configured to move the combiner, and a controller connected to the display panel, the sensing unit, and the drive unit, wherein the controller controls the drive unit so as to move the combiner, in order to move a view box when the sensing unit senses variation in the position of the driver, the view box being an area in which the entire virtual image is seen by the driver, and the controller is configured to control the display panel so as to correct a position of the virtual image when the combiner is rotated as the position of the driver changes, to control the display panel such that the image on the display panel is moved leftward by a second prescribed distance, in order to correct the rightward movement of the virtual image by a first prescribed distance when the combiner is rotated clockwise, to control the display panel such that the virtual image is fixed so as to match a forward scene, and when the sensing unit senses that the position of the driver deviates from the view box despite the rotation of the combiner, the controller is configured to control a notification module so as to provide the driver with a warning message announcing that the driver deviates from the view box due to excessive movement.

The drive unit may rotate the combiner vertically or horizontally.

In addition, the controller may control the drive unit so as to rotate the combiner upward and correspondingly move the view box downward when the sensing unit senses that the position of the driver has moved downward.

The controller may control the display panel so as to correct a position or magnification of the virtual image when the concave mirror is rotated as the position of the driver is moved.

It is to be understood that both the foregoing general description and the following detailed description of the present invention are exemplary and explanatory and are intended to provide further explanation of the present invention as claimed.

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 is a view schematically illustrating the configuration of an HUD device in accordance with one embodiment of the related art;
FIG. 2 is a view schematically illustrating a display device in accordance with one exemplary embodiment of the present invention;
FIG. 3 is a view schematically illustrating the mechanism of the display device in accordance with one exemplary embodiment of the present invention;
FIG. 4 is a block diagram illustrating the display device in accordance with one exemplary embodiment of the present invention;
FIG. 5 is a view illustrating the correction of the position of a virtual image in accordance with the present invention;
FIG. 6 is a view illustrating the correction of the magnification of a virtual image in accordance with the present invention; and
FIG. 7 is a view illustrating a combiner type display device in accordance with another exemplary embodiment of the present invention.

Hereinafter, exemplary embodiments of the present invention will be described in detail with reference to the accompanying drawings.

Meanwhile, the configuration or control method of a device that will be described hereinafter is provided for explanation of the embodiments of the present invention, and is not intended to limit the technical range of the present invention. The same reference numerals throughout the entire specification designate the same constituent elements.

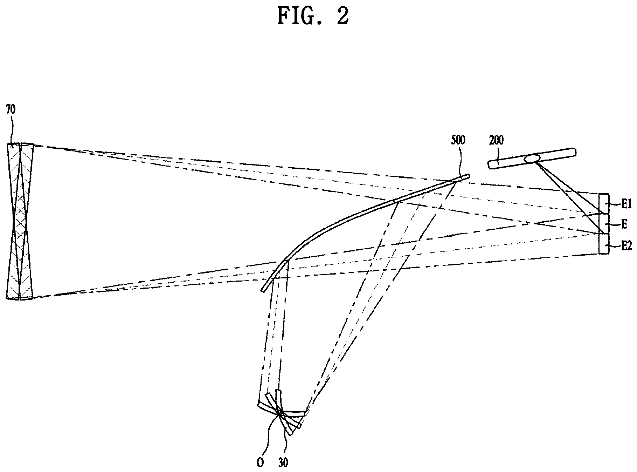

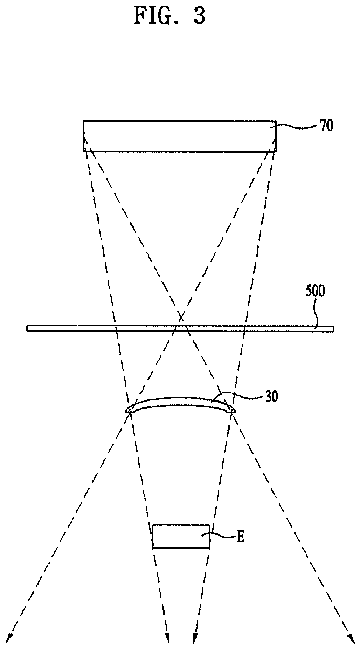

FIG. 2 is a view schematically illustrating a display device in accordance with one exemplary embodiment of the present invention, and FIG. 3 is a view schematically illustrating the mechanism of the display device in accordance with one exemplary embodiment of the present invention.

The display device in accordance with one exemplary embodiment of the present invention will be described with reference to FIG. 2.

The display device of the present invention includes a display panel 10 and a concave mirror 30.

The display panel 10 refers to a device that provides an image containing driving information. The driving information may include, for example, the condition of the vehicle, information regarding the road on which the vehicle is being driven, and navigation information.

The display panel 10 serves to output an image including the driving information described above and to provide a driver with the output image. The display panel 10 produces an image by controlling electrical signals.

The kinds of the display panel 10 may include, for example, a Liquid Crystal Display (LCD) panel, a Light Emitting Diode (LED) panel, and an Organic Light Emitting Diode (OLED) panel.

Meanwhile, the concave mirror 30 refers to a mirror that reflects the image containing the driving information to a windshield. The concave mirror 30 is generally provided to enlarge the image.

In addition, the image reflected by the concave mirror 30 is reflected by the windshield 500 and transmitted to the driver. The image transmitted to the driver overlaps the scene in the driver's forward field of view and is perceived as a virtual image that is located at a position forwardly spaced apart from the windshield 500.

The windshield 500 of the present invention has higher reflectance than a general glass windshield. The windshield 500 having high reflectance functions to reflect the image to the driver and to transmit light at a given rate so as to assist the driver in viewing the forward scene.

The relationship between the size of the concave mirror 30, the size of a virtual image 70, and the driver's view box E will be described below with reference to FIG. 3.

The driver's view box E is the area in which the entire image 12 on the display panel 10 is displayed as the virtual image 70. In this area, the driver can view the complete image containing the driving information.

This is based on the rule whereby the angle of incidence is the same as the angle of reflection. When the image 12 introduced into the concave mirror 30 is reflected and displayed as the virtual image 70, the driver's view box E is determined in a given area at the angle of reflection which is the same as the angle of incidence of the light constituting the image. However, when the position of the driver deviates from the view box E, the driver cannot view the image.

In other words, based on the position of the driver, there are present an area of the view box E in which the entire image 12 on the display panel 10 is visible, an area in which a portion of the image 12 is cut and therefore not visible, and an area in which none of the image 12 is visible.

More specifically, in relation with the present invention, the size of the view box E is determined according to the size of the virtual image 70 formed outside the windshield 500, or the size of the concave mirror 30.

That is, the size of the view box E increases as the size of the virtual image 70 decreases or as the size of the concave mirror 30 increases.

Therefore, increasing the size of the virtual image 70 in order to transmit large amounts of driving information to the driver, or reducing the size of the concave mirror 30 in order to reduce the volume of the HUD device problematically causes a reduction in the size of the view box E.

In another viewpoint, in a case where the virtual image 70 has a predetermined size, the size of the concave mirror 30 must increase in order to widen the view box E. However, this increases the volume of the HUD device. Since the HUD device is installed in a limited space inside the vehicle, the volume of the HUD device is limited.

To solve the problem described above, the display device of the present invention includes a sensing unit 200, a drive unit 300, and a controller 100.

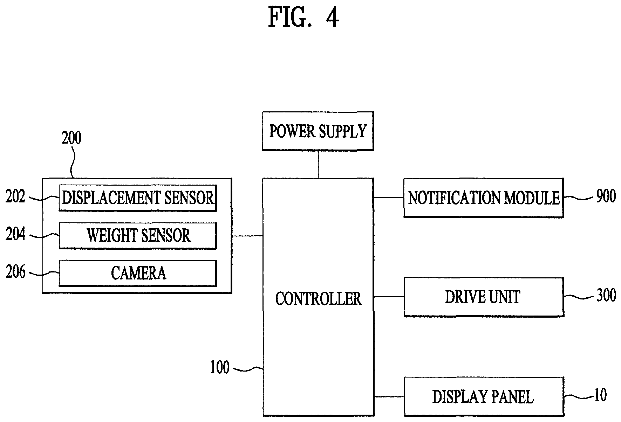

FIG. 4 is a block diagram illustrating the display device in accordance with one exemplary embodiment of the present invention.

The present invention may vary the position of the driver's view box E by tracking the position of the driver and correspondingly adjusting the angle of the concave mirror 30.

The present invention may provide the driver with a substantially enlarged view box E. In this way, the present invention provides a display device capable of providing an image containing the driving information despite variation in the position of the driver.

In addition, even if the size of the concave mirror 30 is reduced in order to reduce the volume of the HUD device, the present invention may maintain the view box E substantially the same size as in the related art by varying the position of the view box E.

In conclusion, the display device of the present invention may provide a view box that is the same size as in the related art while achieving a reduced volume thereof thanks to a reduction in the size of the concave mirror.

As exemplarily illustrated in FIG. 4, the controller 100 may control the display panel 10, the sensing unit 200, and the drive unit 300.

The sensing unit 200 provided in the present invention is configured to sense the position of the driver or any displacement in the driver's position.

Specifically, the sensing unit 200 is configured to sense, for example, the movement of the driver's head, the movement of the driver's eyes, and the movement of the center of weight of the driver.

For example, in order to sense the movement of the driver's head, the sensing unit 200 may include a plurality of displacement sensors 202 to sense variation in displacement. Alternatively, in order to sense the movement of the center of weight of the driver, the sensing unit 200 may include a weight sensor 204 provided in the driver seat (not illustrated). In yet another alternative, in order to sense the movement of the driver's head or the movement of the driver's eyes, the sensing unit 200 includes a camera 206 capable of tracking the driver.

In particular, for example, an IR camera or an IR sensor may be used as eye tracking technology to sense the movement of the eyes. This is known technology, and a detailed description thereof is omitted herein.

The tracking camera 206 may be provided near the upper end of the windshield 500 or near a rear-view mirror (not illustrated) inside the vehicle, so as to sense the movement of the driver's eyes or the driver's head.

The tracking camera 206 may send an image, which captures the movement of the driver, to the controller 100, which will be described below. The controller 100 may sense variation in the position of the driver's eyes by analyzing image information. Note that the tracking camera 206 may include a camera controller (not illustrated), which may analyze the image showing the movement of the driver and sense variation in the position of the driver's eyes.

Meanwhile, the drive unit 300 according to the present invention functions to move the concave mirror 30.

In other words, the drive unit 300 may be provided at the concave mirror 30 and may provide driving power required to move the concave mirror 30.

In this case, the drive unit 300 may vertically or horizontally rotate the concave mirror 30. As such, the drive unit 300 is provided so as to move the concave mirror 30 according to the movement of the driver's eyes sensed by the sensing unit 200 or the controller 100.

In a case where the concave mirror 30 is rotated by the drive unit 300, the concave mirror 30 may be rotated in the state in which the center point O of the concave mirror 30 is fixed. Note that the concave mirror 30 may be rotated about a prescribed point in the concave mirror 30, instead of the center point O.

The drive unit 300 needs to finely adjust the movement or rotation of the concave mirror 30. This is because the displacement or the rotation angle of the virtual image 70 formed on the windshield 500 is great even if the movement distance or the rotation angle of the concave mirror 30 is finely adjusted. In addition, the variation of the view box E may become great.

The drive unit 300 may include a stepping motor (not illustrated) which is capable of finely adjusting the movement or rotation of the concave mirror 30, but may have any other configuration capable of moving the concave mirror. The configuration of such a stepping motor is known, and thus a detailed description thereof is omitted herein.

In the present invention, the controller 100 is configured to control the drive unit 300 to move the concave mirror 30, in order to move the view box E, which is the area in which the driver can view the entire image containing the driving information, when the sensing unit 200 senses that the position of the driver has varied.

The movement of the concave mirror 30 caused by the drive unit 300 means the vertical or horizontal rotation of the concave mirror 30.

Referring again to FIG. 2, the controller 100 may control the drive unit 300 so as to rotate the concave mirror 30 downward and correspondingly move the view box E upward when the sensing unit 200 senses that the position of the driver has moved upward.

Here, that the position of the driver has moved may correspond to the case where the driver lifts their head upward, the case where the driver moves their eyes upward, and the case where a different person, who is tall, is driving the vehicle.

In addition, the downward rotation of the concave mirror 30 may mean the clockwise rotation of the concave mirror 30 on the basis of the illustration of FIG. 2.

Meanwhile, the controller 100 may control the drive unit 300 so as to rotate the concave mirror 30 upward and correspondingly move the view box E downward when the sensing unit 200 senses that the position of the driver has moved downward.

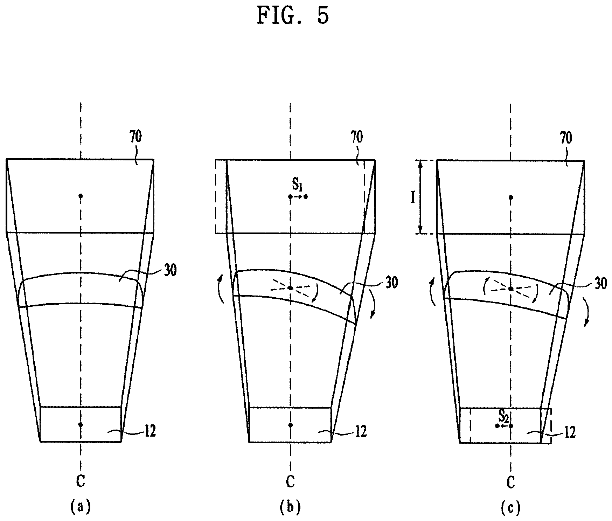

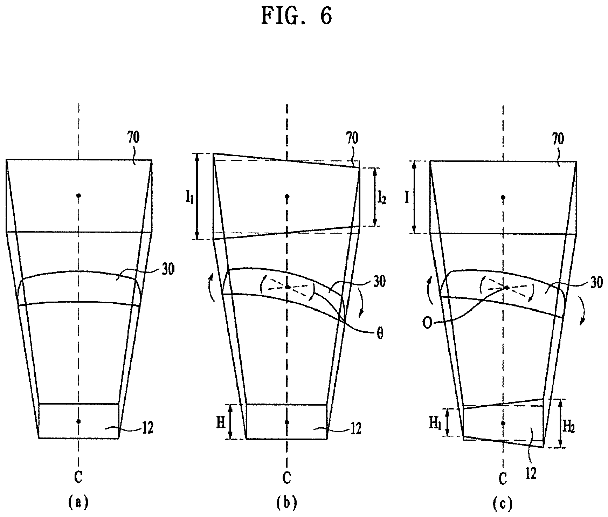

FIG. 5 is a view illustrating the correction of the position of the virtual image in accordance with the present invention. FIG. 6 is a view illustrating the correction of the magnification of the virtual image in accordance with the present invention.

Hereinafter, the method of correcting the position and magnification of the virtual image will be described with reference to FIGs. 5 and 6.

The controller 100 provided in the present invention is configured to correct the position of the virtual image 70 when the concave mirror 30 is rotated as the position of the driver is moved.

In addition, the controller 100 provided in the present invention may correct the magnification of the virtual image 70 when the concave mirror 30 is rotated as the position of the driver is moved.

In order to correct the position of the virtual image 70 or to correct the magnification of the virtual image 70, the controller 100 is configured to control the display panel 10.

Referring to FIG. 5, the driver may turn their head or eyes leftward while driving the vehicle. When the sensing unit 200 senses variation in the position of the driver, the controller 100 may control the drive unit 300 so as to rotate the concave mirror 30 clockwise and correspondingly move the view box E leftward, which may allow the entire image of the driving information to be seen by the driver.

Here, the term "clockwise" refers to the direction in which the concave mirror 30 is rotated such that the right side thereof becomes close to the center line C illustrated in FIG. 5 or the direction in which the concave mirror 30 is rotated rightward when viewing the concave mirror 30 from the top side based on the illustration of FIG. 5.

In this case, as exemplarily illustrated in FIG. 5(b), as the virtual image 70 reflected in the concave mirror 30 is moved rightward, it is necessary to correct this movement.

This is because the movement of the virtual image 70 following the movement of the driver hinders the driving of the driver. In addition, there may occur the problem whereby the virtual image 70 does not match the scene in front of the windshield 500.

To solve this problem, as exemplarily illustrated in FIG. 5(c), the controller 100 of the present invention is configured to control the position of the image 12 on the display panel 10 so as to be moved leftward by a second prescribed distance S2, in order to correct the rightward movement of the virtual image 70 by a first prescribed distance S1 when the concave mirror 30 is rotated clockwise.

Accordingly, in the present invention, even if the concave mirror 30 is rotated, the virtual image 70 is fixed at the original position thereof, thus causing no confusion of the driver. That is, the virtual image 70 is not moved, but is fixed so as to match the forward scene, regardless of variation in the position of the driver.

Meanwhile, the case where the position of the driver is moved rightward is the same as the above-described case, except that the direction is the opposite, and thus a repetitive detailed description thereof is omitted herein.

In addition, in the case where the position of the driver is moved upward or downward, the position of the virtual image 70 may be corrected by the same method, and thus a repetitive detailed description thereof is omitted herein.

Meanwhile, referring to FIG. 6, in the case where the position of the driver is moved leftward, the concave mirror 30 is rotated clockwise so as to move the view box E.

As exemplarily illustrated in FIG. 6(b), when the concave mirror 30 is rotated clockwise, the distance from the right side of the image to the concave mirror 30 may be different from the distance from the concave mirror 30 to the left side of the virtual image 70.

As exemplarily illustrated in FIG. 6(b), the height H of the image 12 output from the display panel 10 is assumed to be constant. When the concave mirror 30 is rotated clockwise, the right side of the image 12 becomes close to the concave mirror 30, and therefore the right side of the virtual image 70 is reduced. On the other hand, the left side of the image 12 becomes farther away from the concave mirror 30, and therefore the left side of the virtual image is enlarged.

That is, assuming that the height of the virtual image 70 before the rotation of the concave mirror 30 is "I", the left side I₁ of the virtual image 70 is enlarged, and the right side I₂ of the virtual image 70 is shrunk.

Accordingly, the virtual image 70 to be seen by the driver may undergo distortion unlike the image on the display panel. The distorted virtual image may provide the driver with incorrect information.

In order to solve the problem described above, the controller 100 may control the image 12 on the display panel 10 such that the ratio of the right side H₂ of the image 12 to the left side H₁ thereof becomes greater than 1, in order to prevent that the ratio of the left side I₁ of the virtual image 70 to the right side I₂ thereof from becoming greater than 1 when the concave mirror 30 is rotated clockwise.

That is, the image 12 on the display panel 10 is output so as to be reduced on the right side and enlarged on the left side.

Accordingly, the final virtual image 70, to be seen by the driver, has the same or similar ratio or size to that of the virtual image 70, that was seen before the concave mirror 30 was rotated.

This method may be equally applied to the case where the concave mirror 30 is rotated counterclockwise, or rotated upward or downward, and a repetitive description thereof is omitted herein.

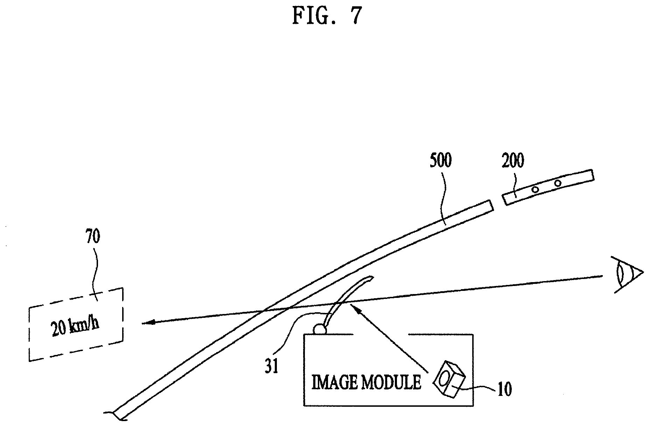

FIG. 7 is a view illustrating a combiner type display device in accordance with another embodiment of the present invention.

The display device in accordance with another embodiment of the present invention includes the display panel 10, which provides an image containing driving information, a combiner 31, which reflects a portion of the image 12 and transmits a remaining portion of the image 12 so as to cause the driver to view a virtual image, the sensing unit 200, which senses the position of the driver, the drive unit 300, which moves the combiner 31, and the controller 100, which is connected to the display panel 10, the sensing unit 200, and the drive unit 300.

The controller 100 is configured to control the drive unit 300 so as to move the combiner 31, in order to move the view box E in which the entire image 12 containing the driving information is seen by the driver when the sensing unit 200 senses variation in the position of the driver.

The drive unit 300 may vertically or horizontally rotate the combiner 31.

The controller 100 may control the drive unit 300 so as to rotate the combiner 31 upward and correspondingly move the view box E downward when the sensing unit 200 senses that the position of the driver has been moved downward.

The controller 100 may control the display panel 10 so as to correct the position or the magnification of the virtual image 70 when the combiner 31 is rotated as the position of the driver is moved.

The combiner 31 may function to enlarge the image on the display panel 10, similar to the concave mirror.

In place of the windshield, the combiner 31 reflects the image to the driver. The reflected image is seen by the driver as a virtual image that has passed through the combiner 31 and is formed in front of the combiner 31.

The combiner 31 may be formed of a semi-transparent material, which reflects an image and transmits light so as not to block the driver's view.

A description related to components other than the combiner 31 may be replaced with the above description, and thus a repetitive description thereof is omitted herein.

Meanwhile, although not illustrated in the drawings, the display device in accordance with another example not being claimed and thus not part of the present invention may further include a Fresnel lens between the concave mirror 30 and the windshield 500. That is, the image reflected by the concave mirror 30 may pass through the Fresnel lens.

The Fresnel lens is a condensing lens that serves to gather light, like a convex lens while having a reduced thickness. Here, the reason why the lens having a reduced thickness can serve as a convex lens is that the lens is divided into several bands, each acting as a prism, so as to reduce aberrations.

In addition, it is necessary to reduce the difference in the indices of refraction in order to focus light on one location. To this end, it will be appreciated that the Fresnel lens has numerous concentric grooves formed in the surface thereof, thus focusing light on one location thanks to the adjustment in the index of refraction by the grooves.

Accordingly, providing the Fresnel lens between the concave mirror 30 and the windshield 500 may enlarge the image, and may reduce the length of the path of the image. The use of the Fresnel lens may minimize the volume of the HUD device, may help realize the same size of image even if the size of the concave mirror 30 is reduced, and may allow a larger image to be displayed on the windshield 500.

Meanwhile, the display device of the present invention further includes a notification module 900, which is configured to transmit a warning message to the driver via, for example, sound.

When the sensing unit 200 senses that the position of the driver deviates from the view box E despite the rotation of the concave mirror 30, the controller 100 is configured to control the notification module 900 so as provide the driver with a warning message announcing that the driver deviates from the view box E due to excessive movement via, for example, sound or an image.

As is apparent from the above description, the present invention may have the effect of providing a display device, which provides a HUD device.

In addition, the present invention may have the effect of providing a display device, which minimizes the volume of a HUD device, thereby allowing the HUD device to be easily installed in a vehicle having a limited space.

In addition, the present invention may have the effect of providing a display device, which provides a larger view box than a view box that can be made using the concave mirror provided in a general HUD device.

## Claims

1. A display device comprising:
a display panel (10) configured to provide an image containing driving information;
a concave mirror (30) configured to reflect the image to a windshield (500), so as to allow a driver to view a virtual image via the windshield;
a sensing unit (200) configured to sense a position of the driver, the sensing unit (200) including one tracking camera (206) to sense a movement of the driver's eyes or the driver's head;
a drive unit (300) configured to move the concave mirror (30); and
a controller (100) connected to the display panel (10), the sensing unit (200), and the drive unit (300),
wherein the controller (100) is configured to control the drive unit (300) so as to move the concave mirror (30) in order to move a view box (E) when the sensing unit (200) senses variation in the position of the driver, the view box (E) being an area in which the entire image containing the driving information is seen by the driver, and
wherein the controller (100) is configured to control the display panel (10) so as to correct a position of the virtual image when the concave mirror (30) is rotated as the position of the driver changes,
**characterized in that** the controller (100) is configured to control the display panel (10) such that the image on the display panel (10) is moved leftward by a second prescribed distance, in order to correct the rightward movement of the virtual image by a first prescribed distance when the concave mirror (30) is rotated clockwise, and
wherein the controller (100) is configured to control the display panel (10) such that the virtual image is fixed so as to match a forward scene, and
when the sensing unit (200) senses that the position of the driver deviates from the view box (E) despite the rotation of the concave mirror (30), the controller (100) is configured to control a notification module (900) so as to provide the driver with a warning message announcing that the driver deviates from the view box (E) due to excessive movement.

2. The display device according to claim 1, wherein the sensing unit (200) senses movement of the driver's head, or senses movement of the driver's pupils.

3. The display device according to claim 1 or 2, wherein the drive unit (300) rotates the concave mirror (30) vertically or horizontally.

4. The display device according to claim 1, 2, or 3, wherein the drive unit (300) rotates the concave mirror (30) without moving a center position of the concave mirror.

5. The display device according to any one of claims 1 to 4, wherein the controller (100) is configured to control the drive unit (300) so as to rotate the concave mirror (30) downward and correspondingly move the view box (E) upward when the sensing unit (200) senses that the position of the driver has moved upward.

6. The display device according to any one of claims 1 to 4, wherein the controller (100) is configured to control the drive unit (300) so as to rotate the concave mirror (30) upward and correspondingly move the view box (E) downward when the sensing unit (200) senses that the position of the driver has moved downward.

7. The display device according to any one of claims 1 to 6, wherein the controller (100) is configured to control the display panel (10) so as to correct a magnification of the virtual image when the concave mirror (30) is rotated as the position of the driver changes.

8. The display device according to claim 7, wherein the controller (100) is configured to control the image on the display panel (10) such that a ratio of the right side of the image to the left side thereof becomes greater than 1, in order to prevent that a ratio of the left side of the virtual image to the right side thereof from becoming greater than 1 when the concave mirror (30) is rotated clockwise.

9. A display device comprising:
a display panel (10) configured to provide an image containing driving information;
a combiner (31) configured to reflect a portion of the image and to pass a remaining portion of the image, so as to cause a driver to view a virtual image;
a sensing unit (200) configured to sense a position of the driver, the sensing unit (200) including one tracking camera (206) to sense a movement of the driver's eyes or the driver's head;
a drive unit (300) configured to move the combiner; and
a controller (100) connected to the display panel (10), the sensing unit (200), and the drive unit (300),
wherein the controller (100) is configured to control the drive unit (300) so as to move the combiner (31), in order to move a view box (E) when the sensing unit (200) senses variation in the position of the driver, the view box being an area in which the entire virtual image is seen by the driver, and
wherein the controller (100) is configured to control the display panel (10) so as to correct a position of the virtual image when the combiner (31) is rotated as the position of the driver changes,
**characterized in that** the controller (100) is configured to control the display panel (10) such that the image on the display panel (10) is moved leftward by a second prescribed distance, in order to correct the rightward movement of the virtual image by a first prescribed distance when the combiner (31) is rotated clockwise, and
wherein the controller (100) is configured to control the display panel (10) such that the virtual image is fixed so as to match a forward scene, and
when the sensing unit (200) senses that the position of the driver deviates from the view box (E) despite the rotation of the combiner (31), the controller (100) is configured to control a notification module (900) so as to provide the driver with a warning message announcing that the driver deviates from the view box (E) due to excessive movement.

10. The display device according to claim 9, wherein the drive unit (300) rotates the combiner (31) vertically or horizontally.

11. The display device according to claim 9, or 10, wherein the controller (100) is configured to control the drive unit (300) so as to rotate the combiner (31) upward and correspondingly move the view box (E) downward when the sensing unit (200) senses that the position of the driver has moved downward.

12. The display device according to claim 9, 10, or 11, wherein the controller (100) is configured to control the display panel (10) so as to correct a magnification of the virtual image when the combiner (31) is rotated as the position of the driver changes.

## Patentansprüche

1. Anzeigevorrichtung mit:
einer Anzeigetafel (10), die konfiguriert ist, ein Bild bereitzustellen, das Fahrinformationen enthält;
einem Konkavspiegel (30), der konfiguriert ist, das Bild auf eine Windschutzscheibe (500) zu reflektieren, um es einem Fahrer zu ermöglichen, über die Windschutzscheibe ein virtuelles Bild zu sehen;
einer Erfassungseinheit (200), die konfiguriert ist, eine Position des Fahrers zu erfassen, wobei die Erfassungseinheit (200) eine Nachführungskamera (206) aufweist, um eine Bewegung der Augen des Fahrers oder des Kopfes des Fahrers zu erfassen;
einer Antriebseinheit (300), die konfiguriert ist, den Konkavspiegel (30) zu bewegen; und
einer Steuereinrichtung (100), die mit der Anzeigetafel (10), der Erfassungseinheit (200) und der Antriebseinheit (300) verbunden ist,
wobei die Steuereinrichtung (100) konfiguriert ist, die Antriebseinheit (300) zu steuern, den Konkavspiegel (30) zu bewegen, um einen Betrachtungskasten (E) zu bewegen, wenn die Erfassungseinheit (200) eine Änderung der Position des Fahrers erfasst, wobei der Betrachtungskasten (E) ein Bereich ist, in dem das gesamte Bild, das die Fahrinformationen enthält, durch den Fahrer gesehen wird, und
wobei die Steuereinrichtung (100) konfiguriert ist, die Anzeigetafel (10) zu steuern, eine Position des virtuellen Bilds zu korrigieren, wenn der Konkavspiegel (30) gedreht wird, da sich die Position des Fahrers ändert,
**dadurch gekennzeichnet, dass** die Steuereinrichtung (100) konfiguriert ist, die Anzeigetafel (10) so zu steuern, dass das Bild auf der Anzeigetafel (10) um einen zweiten vorgeschriebenen Abstand nach links bewegt wird, um die Bewegung des virtuellen Bilds um einen ersten vorgeschriebenen Abstand nach rechts zu korrigieren, wenn der Konkavspiegel (30) im Uhrzeigersinn gedreht wird, und
wobei die Steuereinrichtung (100) konfiguriert ist, die Anzeigetafel (10) so zu steuern, dass das virtuelle Bild fixiert ist, so dass es mit einer vorn gelegenen Szene übereinstimmt, und
wenn die Erfassungseinheit (200) erfasst, dass die Position des Fahrers trotz der Drehung des Konkavspiegels (30) vom Betrachtungskasten (E) abweicht, die Steuereinrichtung (100) konfiguriert ist, ein Benachrichtigungsmodul (900) zu steuern, um den Fahrer mit einer Warnmeldung zu versehen, die meldet, dass der Fahrer infolge einer übermäßigen Bewegung vom Betrachtungskasten (E) abweicht.

2. Anzeigevorrichtung nach Anspruch 1, wobei die Erfassungseinheit (200) eine Bewegung des Kopfes des Fahrers erfasst, oder eine Bewegung der Pupillen des Fahrers erfasst.

3. Anzeigevorrichtung nach Anspruch 1 oder 2, wobei die Antriebseinheit (300) den Konkavspiegel (30) vertikal oder horizontal dreht.

4. Anzeigevorrichtung nach Anspruch 1, 2, oder 3, wobei die Antriebseinheit (300) den Konkavspiegel (30) dreht, ohne eine Mittelposition des Konkavspiegels zu bewegen.

5. Anzeigevorrichtung nach einem der Ansprüche 1 bis 4, wobei die Steuereinrichtung (100) konfiguriert ist, die Antriebseinheit (300) zu steuern, den Konkavspiegel (30) nach unten zu drehen und entsprechend den Betrachtungskasten (E) nach oben zu bewegen, wenn die Erfassungseinheit (200) erfasst, dass sich die Position des Fahrers nach oben bewegt hat.

6. Anzeigevorrichtung nach einem der Ansprüche 1 bis 4, wobei die Steuereinrichtung (100) konfiguriert ist, die Antriebseinheit (300) zu steuern, den Konkavspiegel (30) nach oben zu drehen und entsprechend den Betrachtungskasten (E) nach unten zu bewegen, wenn die Erfassungseinheit (200) erfasst, dass sich die Position des Fahrers nach unten bewegt hat.

7. Anzeigevorrichtung nach einem der Ansprüche 1 bis 6, wobei die Steuereinrichtung (100) konfiguriert ist, die Anzeigetafel (10) zu steuern, um eine Vergrößerung des virtuellen Bilds zu korrigieren, wenn der Konkavspiegel (30) gedreht wird, da sich die Position des Fahrers ändert.

8. Anzeigevorrichtung nach Anspruch 7, wobei die Steuereinrichtung (100) konfiguriert ist, das Bild auf der Anzeigetafel (10) so zu steuern, dass ein Verhältnis der rechten Seite des Bilds zu dessen linken Seite größer als 1 wird, um zu verhindern, dass ein Verhältnis der linken Seite des virtuellen Bilds zu dessen rechten Seite größer als 1 wird, wenn der Konkavspiegel (30) im Uhrzeigersinn gedreht wird.

9. Anzeigevorrichtung mit:
einer Anzeigetafel (10), die konfiguriert ist, ein Bild bereitzustellen, das Fahrinformationen enthält;
einem Kombinierer (31), der konfiguriert ist, einen Anteil des Bilds zu reflektieren und einen restlichen Anteil des Bilds durchzulassen, um zu bewirken, dass ein Fahrer ein virtuelles Bild sieht;
einer Erfassungseinheit (200), die konfiguriert ist, eine Position des Fahrers zu erfassen, wobei die Erfassungseinheit (200) eine Nachführungskamera (206) aufweist, um eine Bewegung der Augen des Fahrers oder des Kopfes des Fahrers zu erfassen;
einer Antriebseinheit (300), die konfiguriert ist, den Kombinierer zu bewegen; und
einer Steuereinrichtung (100), die mit der Anzeigetafel (10), der Erfassungseinheit (200) und der Antriebseinheit (300) verbunden ist,
wobei die Steuereinrichtung (100) konfiguriert ist, die Antriebseinheit (300) zu steuern, den Kombinierer (31) zu bewegen, um einen Betrachtungskasten (E) zu bewegen, wenn die Erfassungseinheit (200) eine Änderung der Position des Fahrers erfasst, wobei der Betrachtungskasten (E) ein Bereich ist, in dem das gesamte virtuelle Bild durch den Fahrer gesehen wird, und
wobei die Steuereinrichtung (100) konfiguriert ist, die Anzeigetafel (10) zu steuern, eine Position des virtuellen Bilds zu korrigieren, wenn der Kombinierer (31) gedreht wird, da sich die Position des Fahrers ändert,
**dadurch gekennzeichnet, dass** die Steuereinrichtung (100) konfiguriert ist, die Anzeigetafel (10) so zu steuern, dass das Bild auf der Anzeigetafel (10) um einen zweiten vorgeschriebenen Abstand nach links bewegt wird, um eine Bewegung des virtuellen Bilds um einen ersten vorgeschriebenen Abstand nach rechts zu korrigieren, wenn der Kombinierer (31) im Uhrzeigersinn gedreht wird, und
wobei die Steuereinrichtung (100) konfiguriert ist, die Anzeigetafel (10) so zu steuern, dass das virtuelle Bild fixiert ist, so dass es mit einer vorn gelegenen Szene übereinstimmt, und
wenn die Erfassungseinheit (200) erfasst, dass die Position des Fahrers trotz der Drehung des Kombinierers (31) vom Betrachtungskasten (E) abweicht, die Steuereinrichtung (100) konfiguriert ist, ein Benachrichtigungsmodul (900) zu steuern, um den Fahrer mit einer Warnmeldung zu versehen, die meldet, dass der Fahrer infolge einer übermäßigen Bewegung vom Betrachtungskasten (E) abweicht.

10. Anzeigevorrichtung nach Anspruch 9, wobei die Antriebseinheit (300) den Kombinierer (31) vertikal oder horizontal dreht.

11. Anzeigevorrichtung nach Anspruch 9, oder 10, wobei die Steuereinrichtung (100) konfiguriert ist, die Antriebseinheit (300) zu steuern, den Kombinierer (31) nach oben zu drehen und entsprechend den Betrachtungskasten (E) nach unten zu bewegen, wenn die Erfassungseinheit (200) erfasst, dass sich die Position des Fahrers nach unten bewegt hat.

12. Anzeigevorrichtung nach Anspruch 9, 10, oder 11, wobei die Steuereinrichtung (100) konfiguriert ist, die Anzeigetafel (10) zu steuern, eine Vergrößerung des virtuellen Bilds zu korrigieren, wenn der Kombinierer (31) gedreht wird, da sich die Position des Fahrers ändert.

## Revendications

1. Dispositif d'affichage, comprenant :
un panneau d'affichage (10) prévu pour fournir une image contenant des informations de conduite ;
un miroir concave (30) prévu pour réfléchir l'image vers un pare-brise (500), de manière à permettre à un conducteur de visualiser une image virtuelle sur le pare-brise ;
une unité de détection (200) prévue pour détecter la position du conducteur, ladite unité de détection (200) comprenant une caméra de poursuite (206) destinée à détecter un mouvement des yeux du conducteur ou de la tête du conducteur ;
une unité d'entraînement (300) prévue pour déplacer le miroir concave (30) ; et
un contrôleur (100) relié au panneau d'affichage (10), à l'unité de détection (200) et à l'unité d'entraînement (300),
où le contrôleur (100) est prévu pour commander le déplacement du miroir concave (30) par l'unité d'entraînement (300) afin de mouvoir un rectangle de visualisation (E) quand l'unité de détection (200) détecte un changement de position du conducteur, le rectangle de visualisation (E) étant une zone où la totalité de l'image contenant les informations de conduite est vue par le conducteur, et
où le contrôleur (100) est prévu pour commander une correction de position de l'image virtuelle par le panneau d'affichage (10) quand le miroir concave (30) est tourné suite à un changement de position du conducteur,
**caractérisé en ce que** le contrôleur (100) est prévu pour commander le panneau d'affichage (10) de sorte que l'image sur le panneau d'affichage (10) est déplacée vers la gauche d'une deuxième distance définie, afin de corriger le déplacement vers la droite de l'image virtuelle d'une première distance définie quand le miroir concave (30) est tourné dans le sens des aiguilles d'une montre, et
où le contrôleur (100) est prévu pour commander le panneau d'affichage (10) de manière à fixer l'image virtuelle afin de correspondre à une scène avant, et,
quand l'unité de détection (200) détecte que la position du conducteur est déviée du rectangle de visualisation (E) malgré la rotation du miroir concave (30), le contrôleur (100) est prévu pour commander l'émission par un module de notification (900) d'un message d'avertissement annonçant au conducteur que le conducteur sort du rectangle de visualisation (E) en raison d'un déplacement excessif.

2. Dispositif d'affichage selon la revendication 1, où l'unité de détection (200) détecte un mouvement de la tête du conducteur, ou détecte un mouvement des pupilles du conducteur.

3. Dispositif d'affichage selon la revendication 1 ou la revendication 2, où l'unité d'entraînement (300) tourne le miroir concave (30) verticalement ou horizontalement.

4. Dispositif d'affichage selon la revendication 1, la revendication 2 ou la revendication 3, où l'unité d'entraînement (300) tourne le miroir concave (30) sans déplacer le centre du miroir concave.

5. Dispositif d'affichage selon l'une des revendications 1 à 4, où le contrôleur (100) est prévu pour commander la rotation vers le bas du miroir concave (30) par l'unité d'entraînement (300) et déplacer en conséquence le rectangle de visualisation (E) vers le haut quand l'unité de détection (200) détecte un changement de position du conducteur vers le haut.

6. Dispositif d'affichage selon l'une des revendications 1 à 4, où le contrôleur (100) est prévu pour commander la rotation vers le haut du miroir concave (30) par l'unité d'entraînement (300) et déplacer en conséquence le rectangle de visualisation (E) vers le bas quand l'unité de détection (200) détecte un changement de position du conducteur vers le bas.

7. Dispositif d'affichage selon l'une des revendications 1 à 6, où le contrôleur (100) est prévu pour commander la correction d'un grossissement de l'image virtuelle par le panneau d'affichage (10) quand le miroir concave (30) est tourné suite à un changement de position du conducteur.

8. Dispositif d'affichage selon la revendication 7, où le contrôleur (100) est prévu pour commander l'image sur le panneau d'affichage (10) de sorte qu'un rapport entre le côté droit de l'image et le côté gauche de celle-ci devienne supérieur à 1, afin d'empêcher qu'un rapport entre le côté droit de l'image virtuelle et le côté gauche de celle-ci devienne supérieur à 1 quand le miroir concave (30) est tourné dans le sens des aiguilles d'une montre.

9. Dispositif d'affichage, comprenant :
un panneau d'affichage (10) prévu pour fournir une image contenant des informations de conduite ;
un combineur (31) prévu pour réfléchir une partie de l'image et laisser passer une partie restante de l'image, de manière à permettre à un conducteur de visualiser une image virtuelle ;
une unité de détection (200) prévue pour détecter la position du conducteur, ladite unité de détection (200) comprenant une caméra de poursuite (206) destinée à détecter un mouvement des yeux du conducteur ou de la tête du conducteur ;
une unité d'entraînement (300) prévue pour déplacer le combineur ; et
un contrôleur (100) relié au panneau d'affichage (10), à l'unité de détection (200) et à l'unité d'entraînement (300),
où le contrôleur (100) est prévu pour commander le déplacement du combineur (31) par l'unité d'entraînement (300) afin de mouvoir un rectangle de visualisation (E) quand l'unité de détection (200) détecte un changement de position du conducteur, le rectangle de visualisation (E) étant une zone où la totalité de l'image virtuelle est vue par le conducteur, et
où le contrôleur (100) est prévu pour commander une correction de position de l'image virtuelle par le panneau d'affichage (10) quand le combineur (31) est tourné suite à un changement de position du conducteur,
**caractérisé en ce que** le contrôleur (100) est prévu pour commander le panneau d'affichage (10) de sorte que l'image sur le panneau d'affichage (10) est déplacée vers la gauche d'une deuxième distance définie, afin de corriger le déplacement vers la droite de l'image virtuelle d'une première distance définie quand le combineur (31) est tourné dans le sens des aiguilles d'une montre, et
où le contrôleur (100) est prévu pour commander le panneau d'affichage (10) de manière à fixer l'image virtuelle afin de correspondre à une scène avant, et,
quand l'unité de détection (200) détecte que la position du conducteur est déviée du rectangle de visualisation (E) malgré la rotation du combineur (31), le contrôleur (100) est prévu pour commander l'émission par un module de notification (900) d'un message d'avertissement annonçant au conducteur que le conducteur sort du rectangle de visualisation (E) en raison d'un déplacement excessif.

10. Dispositif d'affichage selon la revendication 9, où l'unité d'entraînement (300) tourne le combineur (31) verticalement ou horizontalement.

11. Dispositif d'affichage selon la revendication 9 ou la revendication 10, où le contrôleur (100) est prévu pour commander la rotation vers le haut du combineur (31) par l'unité d'entraînement (300) et déplacer en conséquence le rectangle de visualisation (E) vers le bas quand l'unité de détection (200) détecte un changement de position du conducteur vers le bas.

12. Dispositif d'affichage selon la revendication 9, la revendication 10 ou la revendication 11, où le contrôleur (100) est prévu pour commander la correction d'un grossissement de l'image virtuelle par le panneau d'affichage (10) quand le combineur (31) est tourné suite à un changement de position du conducteur. ,
